# EUROPEAN PATENT APPLICATION

(11) **EP 4 790 559 A1**
(43) Date of publication of application: **12.08.2026**
(21) Application number: 25382100.3
(22) Date of filing: 07.02.2025
(51) Int. Cl.: G06F 11/10, G06F 21/64

(54) **METHOD AND SYSTEM FOR HANDLING DATA AT A DESIRED SAFETY INTEGRITY LEVEL**

(71) Applicant: Siemens Rail Automation S.A.U., 28760 Tres Cantos (Madrid) (ES)
(72) Inventor: Garcia Esteban, Hector, 19005 Guadalajara (ES); Muñoz Muñoz, Jose Luis, 28821 Coslada (Madrid) (ES)
(74) Representative: Siemens Patent Attorneys

(57) **Abstract**

The invention pertains to a method for handling data at a desired safety integrity level with components of a lower safety integrity level, the method comprising the steps:
- defining a target-SIL (T) being a desired safety integrity level for the handling of datasets (D),
- providing a dataset (D) to be handled,
- handling at least two copies (D1, D2) of this dataset (D) over a handling-system (3), wherein the handling of at least one copy (D1, D2) differs compared to the handling of another copy (D1, D2),
- cross-checking the copies (D1, D2) of the dataset (D) after the handling,
- if the copies (D1, D2) are identical: outputting a copy (D1, D2) the dataset (D).

Furthermore, the invention describes a system.

## Description

### Technical Field

The invention describes a method and a system for handling data at a desired safety integrity level.

### Background Art

When data is handled, i.e. transmitted or processed, errors may occur, i.e. concerning a dataset, bits of the dataset may be changed, get lost or appear. Especially in the field of controlling this may lead to failures that could be fatal. There are various procedures needing different resources that could be used for reducing errors when handling datasets. Roughly said, the less errors are desired, the more effort is necessary.

Errors could be quantified, especially also by respecting their relevance on the environment. This quantification could be provided as a probability of a defective dataset after handling. It has been established that some applications have a certain safety integrity levels (SIL) indicating a maximum error-probability or an interval of error-probabilities. Often, there are certain different SILs defining failure-intervals.

Typically, there are four SILs (SIL-1, SIL-2, SIL-3 and SIL-4) with increasing safety requirements. Concerning the measures "Probability of dangerous Failure on Demand" (PFD), "Probability of dangerous Failure per Hour" (PFH), and "Tolerable Functional Failure Rate" (TFFR) well-known in the art, the typical levels are:
SIL1: 10⁻² ≤ PFD < 10⁻¹ and 10⁻⁶ ≤ PFH < 10⁻⁵ and 10⁻⁶ ≤ TFFR < 10⁻⁵,
SIL2: 10⁻³ ≤ PFD < 10⁻² and 10⁻⁷ ≤ PFH < 10⁻⁶ and 10⁻⁷ ≤ TFFR < 10⁻⁶,
SIL3: 10⁻⁴ ≤ PFD < 10⁻³ and 10⁻⁸ ≤ PFH < 10⁻⁷ and 10⁻⁸ ≤ TFFR < 10⁻⁷,
SIL4: 10⁻⁵ ≤ PFD < 10⁻⁴ and 10⁻⁹ ≤ PFH < 10⁻⁸ and 10⁻⁹ ≤ TFFR < 10⁻⁸.

For example, in order to perform vital safety functions (typically SIL4) from railway operator workstations, safety procedures are required to achieve the required SIL by exporting risks to the human operators, since the operator shall cross-check all the information shown which can provoke human errors. This problem is currently solved by exporting vital actions to the operators when performing safety functions through the workstations based on several checks (e.g. the needs to ensure different graphical information's and decide if the vital commands can be executed/confirmed - 100% operator responsibility).

### Summary of Invention

It is the object of the present invention to improve the known systems and methods and provide a method and a system for handling data at a desired safety integrity level, for overcoming the above described problems. It is especially an object of the present invention to provide a certified SIL4 display.

This object is achieved by a method and a system according to the independent claims. Further advantageous embodiments are proposed by the dependent claims.

The present invention proposes thus a method for handling data (transmit and/or process data) at a desired safety integrity level with components of a lower safety integrity level. The method comprises the following steps:
- defining a target-SIL being a desired safety integrity level for the handling of datasets,
- providing a dataset to be handled (preferably at the desired SIL),
- handling at least two copies of this dataset over a handling-system wherein the handling of at least one copy differs compared to the handling of another copy (or the other copy if there are two),
- cross-checking the copies of the dataset after the handling,
- if the copies are identical: outputting a copy of the dataset.

The present invention concerns also a system for handling data at a desired safety integrity level with components of a lower safety integrity level. The method comprises the following components:
- a dataset-unit designed for providing a dataset to be handled,
- a handling-system (could e.g. comprise Commercial Off The Shelf hardware), designed for handling at least two copies of datasets, wherein the handling-system comprises at least two channels differing in hardware and/or software for the handling of copies of a dataset,
- a comparison-unit designed for cross-checking the copies of the dataset after the handling,
- a data-interface designed for outputting a copy of the dataset.

### Description of Embodiments

In short: The method could use environment with a lower SIL and handles multiple copies of the dataset. Preferentially, the handling-system is configured for implementing a technically different handling of each of the copies of the dataset. Since when a process with a certain probability of failure is done n times and when the n results are checked for failures (no defective copy is allowed), then the resulting probability of failure is n · p. Thus. for example, if two copies of a dataset are transmitted over a server with a SIL of SIL2, then after comparing the datasets (no error found) the total SIL is SIL4. Or more detailed: The probability that both datasets are identically defective is in the interval of SIL4. It should be noted that it is possible to handle the copies with the same server at different times. However, in order also to be sensitive for systematical errors, it is preferred to handle the copies with different servers (differing hardware and/or software).

First, a target-SIL has to be defined. This target-SIL is the desired SIL for a process. In the following, it could be assumed that the target SIL is SIL4, however, also SIL1, SIL2 and SIL3 could be target-SILs. The target SIL could be redefined every time the method is repeated or a predefined target-SIL could be used.

Then, a dataset is provided. This is the dataset that should be handled, transmitted and/or processed in accordance with the defined target-SIL. For good understanding, it could be assumed that the dataset comprises commands or information for controlling a machine, a factory or a facility. For example, the dataset comprises commands or information for controlling the signals or track switches of a railroad track. It should be ensured that the dataset is provided with the desired target-SIL, e.g. by a facility that is certified for the desired target-SIL.

Then, two or more copies of the dataset are generated. This could be done with a facility certified for the target-SIL, however, it could also be done with another facility with a lower SIL in order to add the risk of errors of the additional procedure (generating copies) to the special handling procedure. It is preferred that the copies are identical, however, in order to facilitate a different handling, one copy may be changed according to a known function (e.g. reversed for transmission) and changed back according to the inversed function after handling (e.g. reversed again after transmission).

The number of copies should depend on the target-SIL and the SIL of the handling means. In the case the SIL of the handling means (in total) has a maximum value of p_{H} and the SIL of the target-SIL has a maximum value of p_{T}, then the number of copies n should be n ≥ log(p_{H}/p_{T}).

Then, the copies of the provided dataset are handled. This means that they are processed or transmitted. The processing could comprise calculation steps and/or conversion steps. The transmission could be the process of sending the copies over a data network or a data bus. It should be noted that the borders between transmission and processing is blurred, since nearly every transmission also need processing steps (e.g. applying TCP and IP protocols for network transmission) and nearly every processing need transmission steps (downloading data from a memory space into the RAM over a databus). Thus, the term "handling" could be understood as "actively doing something with the copies that could alter the copies". For good understanding, the term "handling" could be understood as "transmitting the data over computing devices (e.g. servers) from a source to a target facility".

In particular, the handling of one copy must differ from the handling of the other copy or at least another of the copies in terms of procedures or pathways. Thus, the copies could be transmitted over two different physical data lines. However, the copies may also be transmitted over the same data-line (at different times) and processed by different servers or by different programs on the same server. Thus, there are various possibilities how the handling may differ: there may be used different software and/or different hardware.

The devices of the handling-system do not need to have the target-SIL. In fact (as said above), the method according to the invention is meant to handle data with a lower SIL and still reach the target-SIL. The devices of the handling-system do not even need to have the same SIL, this could be compensated by the number of copies handled, but then the handling of each copy should differ compared to the handling of each other copy. However, it is clear that the result of the handling must be the same for each copy. For example, each copy is transmitted to a target or processed to provide the same outcome. In particular, the handling-system is itself a component of the claimed system that is characterized by said lower safety integrity level compared to the desired safety integrity level. The number of copies of the dataset is then preferentially defined in function of the safety integrity level of the handling-system when taking into account the target or desired safety integrity level.

The next step is a cross-check of the copies. Here it is checked, whether the copies are identical or not. Being copies of the same dataset, they should be identical after handling. It does not matter that the copies may be changed by processing steps of the handling (this change is desired), since the result is the same with all copies.

However, there is a possibility that a copy is altered in an unwanted manner due to the handling. For example, during transmission, bits of a datastream could change their values, they could get lost or unwanted bits appear due to ripples in the signal. However, any error leaves a trace in one copy, not the other(s). Additionally, concerning relatively long datasets, the probability that the same bits of two copies are affected by errors is very low. Thus, when both copies are identical, then the handling was ok, if not, then there was an error during handling, and it is preferred that the handling should be repeated until the copies are identical.

The cross-check should be done with a unit certified for the target-facility. However, it could also be done with several units certified for lower SIL, wherein the result of the several cross-checks should be compared with a unit certified for the target SIL. It should be noted that the outcome of such unit could be a boolean, only (identical or not) and a certain SIL-certification is much more easy for processes that compare only a few boolean expressions.

However, after the cross-check, the PFD as well as the PFH/TFFR are in a higher SIL than each of the handling channel had. If the handling channels were certified for SIL2, then the SIL of the result is SIL4.

In short, the cross-check involves a thorough comparison of the dataset copies after they have been subjected to different handling processes. The goal is to ensure that despite the variations in handling, the core integrity of the data remains consistent across all copies.

In the case, the copies are identical, a copy of the dataset is outputted. Thus, if the cross-check confirms that all copies of the dataset are identical, then the handled data of the dataset is outputted for further use or storage. For example, the data could be displayed on a Human Machine Interface, saved in a memory or used for executing commands. For example, in the railway signaling business, it is possible displaying SIL4 information on a Human-machine Interface received from a SIL4 vital system over two SIL2 diverse servers.

The method could be repeated with many datasets.

The system is preferably designed for performing the method according to the invention. The function of the components of the system was described above.

The dataset-unit should be certified for the target-SIL so that the probability of errors of the dataset lies within the interval of the target-SIL. It could also provide the copies (that then would have the same SIL as the dataset-unit), however, the generation of copies could also be part of the handling process.

The handling-system could be a system for transmitting data (e.g. a data network) or for processing data. It should comprise at least one server, wherein one server per copy would be advantageous. The servers should differ from another by software or hardware components. The handling system, could be a data network, a data-processing system or e.g. a database that processes data, stores data and sends data to outputs. In a case where the invention is especially advantageous, the handling system is a system for controlling a facility per data commands and/or displaying data for information for controlling a facility.

The handling system comprises at least two channels differing in hardware and/or software, what means that the channels, e.g. data-lines and servers, differ in hardware or software of the components of the channels. For example, when the handling system comprises a data-network, the copies may be sent via different paths. Such paths always differ either in hardware or software and typically in both.

The comparison-unit could be a simple computer designed for cross-checking the copies of the dataset after the handling. Its only task could be to look, whether the copies are identical or not. However, in the case copies are intentionally altered for handling (e.g. reversed), the comparison unit should be designed to change datasets in an inverted way as they have been changed for handling.

The SIL of the comparison-unit is preferably the target-SIL. However, the comparison-unit could also comprise components with a lower SIL that compare a single copy and one master-component comparing the result of the other components.

The following picture outlines a possible architecture that can be realized by software and/or hardware components: Known systems certified for a certain SIL comprise a dataset-unit providing a dataset, a handling-system for handling the dataset and a data-interface for outputting the dataset. All components must be certified for at least the target-SIL.

Now, for the method according to the invention, the comparison unit is added and a diverse path is added to the handling-system and the SIL of the handling-system does not need to be the target-SIL. This results in a much cheaper handling system.

Particularly advantageous embodiments and features of the invention are given by the dependent claims, as revealed in the following description. Features of different claim categories may be combined as appropriate to give further embodiments not described herein.

According to a preferred method, the target-SIL is SIL4 (i.e. a probability of dangerous failure on demand (PFD) between 10⁻⁴ and 10⁻⁵ or a PFH/TFFR between 10⁻⁸ and 10⁻⁹) and the safety integrity level of the handling-system is SIL1, SIL2 or SIL3. Concerning SIL4 as target-SIL, it is preferred that the (minimum) safety integrity level of the handling-system is SIL1 and at least three copies of the dataset are handled. Furthermore, concerning SIL4 as target-SIL, it is preferred that the (minimum) safety integrity level of the handling-system is SIL2 and at least two copies of the dataset are handled. Furthermore, concerning SIL4 as target-SIL, it is preferred that the (minimum) safety integrity level of the handling-system is SIL3 and at least two copies of the dataset are handled.

According to a preferred method, the handling-system has different channels for handling datasets, comprising different hardware and/or different operating software. This means that the types of hardware and/or software are not identical. The channels could be the same physical transmission or processing system. However, they should be different logical channels. This means that there must be a difference in the way of handling the copies. It is preferred that the channels comprise different servers, and wherein at least two copies are handled by different channels. The different channels are advantageous to suppress systematic errors due to hardware or software problems of the handling means.

According to a preferred method, in the course of cross-checking the copies, all copies of the handled dataset are compared whether they are identical or not. It is preferred that in the case one copy differs, it is decided that the target-SIL is not reached. This provides the maximum safety for having a failure probability that lies over the maximum border of the target-SIL.

According to a preferred method, the cross-check is performed based on HASH-codes of the copies. This procedure especially comprising the steps generating a HASH-code of each handled copy and cross-checking the HASH-codes. Thus, it is preferred that the HASH of each copy is computed and then the HASH-codes are compared instead of the actual content of the copies. This has the advantage that the checking procedure could be performed with less effort concerning a huge dataset.

It is preferred that before the handling of a copy, data of this copy is swapped and/or inverted within this copy according to a known pattern and re-swapped and/or re-inverted after handling and before cross-checking. It is preferred that the whole copy is inverted and/or reversed. This ameliorates the process.

According to a preferred method, the dataset comprises control data and in the case the cross-check shows that copies are not identical, the execution of the control data is prohibited. Preferred data would be information that needs to be displayed to an end-user, in order to make decisions based on it.

According to a preferred method, the handling of a dataset is a transmission of the dataset via a physical transmission system, especially comprising a server, e.g. a data network or a control network and/or a processing of the dataset, especially by a computer (wherein a server is a computer).

According to a preferred system, the dataset-unit has the same safety integrity level as a defined target-SIL being a desired safety integrity level for the handling of datasets.

In a preferred practical embodiment, the copies are graphical information. The functional part of the comparison-unit is considered to be made of at least two similar software components which are designed for comparison and each receive a copy and perform the following steps:
a) checking the correctness of the received (previously handled) copy, especially against its dataset protections, e.g. CRC or MD5 or HASH,
b) exchanging the HASH with the other counterpart (the other software component) for the cross-checking of the handled copies,
c) (only) if the cross-check is ok, each one shows the information in a diverse manner on a display for an easy operator comparison. In case of error, it preferably warns the operator in order to avoid an incorrect operation.

The initial information of the copies is the same (e.g. a byte-array of information). The copies are preferably received via diverse servers which handle the information and sent it to graphical software components, which after positively cross-checking the associated HASHES, display the information on a screen display in a diverse manner (e.g. graphic signal on red and preferably an associated text indicating that the "signal is in red".

### Brief Description of the Drawing

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 a method for handling data at a desired SIL according to the state of the art,
Figure 2 a method and a system for handling data at a desired SIL according to the invention.

### Description of Examples

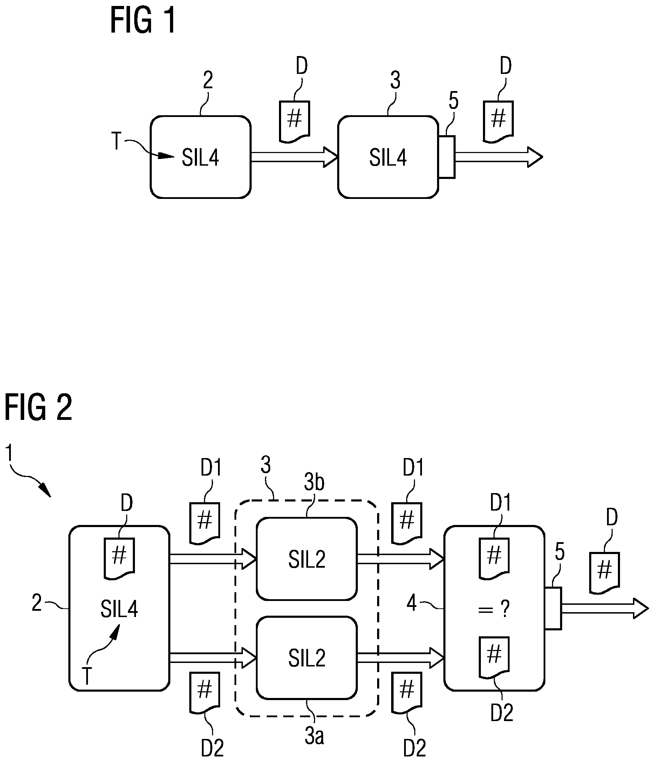

Figure 1 shows a method for handling data at a desired safety integrity level according to the state of the art. First (left), a dataset-unit 2 generates a dataset D according to a desired target-SIL T that is in this example SIL4. Then, the dataset D is transmitted (example for handling) by a handling-unit 3 with the same SIL and then outputted by a data-interface 5. All components must have a SIL equal the target-SIL T or higher.

Figure 2 shows a method and a system for handling data at a desired SIL according to the invention. Here, also a dataset-unit 2 generates a dataset D according to a desired target-SIL T that is in this example SIL4 (left). Then (from left to right), two copies D1, D2 of the dataset D are generated that are identical. In another example, one of these copies D1, D2 may be the HASH of the other copy, wherein at the end, HASH-codes are compared.

The two copies D1, D2 are then handled by the handling-unit 3 with two different channels 3a 3b that are here two servers 3a, 3b. The two channels 3a, 3b have here the same SIL being lower than the target-SIL (i.e. SIL2 in this example, but could also be different for each channel 3a, 3b). After the handling, the two copies D1, D2 are compared by a comparison-unit 4 designed for cross-checking the copies D1, D2 of the dataset D after the handling, and outputted by a data-interface 5 designed for outputting a copy of the dataset D. Although the output is a copy D1, D2, it basically is the dataset D or more exactly is identical concerning its information in the range of the target-SIL T.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The expression "a number of' means "at least one". The mention of a "unit" or a "device" does not preclude the use of more than one unit or device. Independent of the grammatical term usage, individuals with male, female or other gender identities are included within the term.

### List of reference signs

- 1: system
- 2: dataset-unit
- 3: handling-system
- 3a: channel / server
- 3b: channel / server
- 4: comparison-unit
- 5: data-interface
- D: dataset
- D1: copy
- D2: copy
- T: target-SIL

## Claims

1. A method for handling data at a desired safety integrity level with components of a lower safety integrity level, the method comprising the steps:
- defining a target-SIL (T) being a desired safety integrity level for the handling of datasets (D),
- providing a dataset (D) to be handled,
- handling at least two copies (D1, D2) of this dataset (D) over a handling-system (3), wherein the handling of at least one copy (D1, D2) differs compared to the handling of another copy (D1, D2),
- cross-checking the copies (D1, D2) of the dataset (D) after the handling,
- if the copies (D1, D2) are identical: outputting a copy (D1, D2) of the dataset (D).

2. The method according to claim 1, wherein the target-SIL (T) is SIL4 and the safety integrity level of the handling-system (3) is SIL1, SIL2 or SIL3, where it is preferred that,
- the safety integrity level of the handling-system (3) is SIL1 and at least three copies (D1, D2) of the dataset (D) are handled,
- the safety integrity level of the handling-system (3) is SIL2 and at least two copies (D1, D2) of the dataset (D) are handled,
- the safety integrity level of the handling-system (3) is SIL3 and at least two copies (D1, D2) of the dataset (D) are handled.

3. The method according to one of the preceding claims, wherein the handling-system (3) has different channels (3a, 3b) for handling datasets (D), comprising different hardware and/or different operating software, especially wherein the channels (3a, 3b) comprise different servers (3a, 3b), and wherein at least two copies (D1, D2) are handled by different channels (3a, 3b).

4. The method according to one of the preceding claims, wherein in the course of cross-checking the copies (D1, D2), all copies (D1, D2) of the handled dataset (D) are compared whether they are identical or not, preferably wherein in the case one copy (D1, D2) differs, it is decided that the target-SIL (T) is not reached.

5. The method according to one of the preceding claims, wherein the cross-check is performed based on HASH-codes of the copies (D1, D2), especially comprising the steps:
- generating a HASH-code of each handled copy (D1, D2),
- cross-checking the HASH-codes.

6. The method according to one of the preceding claims, wherein the copies are graphical information and the functional part of the comparison-unit comprises at least two similar software components designed for comparison which each receive a copy and perform the following steps:
a) checking the correctness of the received (previously handled) copy, especially against its dataset protections, especially CRC or MD5 or HASH,
b) exchanging the HASH with the other software component for the cross-checking of the handled copies,
c) if the cross-check is ok, each one shows the information on a display, preferably in a diverse manner.

7. The method according to one of the preceding claims, wherein the dataset (D) comprises control data and in the case the cross-check shows that copies (D1, D2) are not identical, the execution of the control data is prohibited.

8. The method according to one of the preceding claims, wherein the handling of a dataset (D) is a transmission of the dataset (D) via a physical transmission system (1), especially comprising a server (3a, 3b), and/or a processing of the dataset (D), especially by a computer.

9. A system (1) for handling data at a desired safety integrity level with components of a lower safety integrity level, the method comprising:
- a dataset-unit (2) designed for providing a dataset (D) to be handled,
- a handling-system (3), designed for handling at least two copies (D1, D2) of datasets (D), wherein the handling-system (3) comprises at least two channels (3a, 3b) differing in hardware and/or software for the handling of copies (D1, D2) of a dataset (D),
- a comparison-unit (4) designed for cross-checking the copies (D1, D2) of the dataset (D) after the handling,
- a data-interface (5) designed for outputting a copy (D1, D2) of the dataset (D).

10. The system (1) according to claim 9, wherein the dataset-unit (2) has the same safety integrity level as a defined target-SIL (T) being a desired safety integrity level for the handling of datasets (D).
